# EUROPEAN PATENT APPLICATION

(11) **EP 4 759 400 A2**
(43) Date of publication of application: **17.06.2026**
(21) Application number: 25215904.1
(22) Date of filing: 14.11.2025
(51) Int. Cl.: B01D 53/14, B01D 53/22, B01D 53/62, B01D 53/96, C25B 3/26, C25B 15/08, C25B 1/04

(54) **ATMOSPHERIC CARBON DIOXIDE CAPTURE SYSTEM**

(30) Priority: 26.11.2024 US 202418960092
(71) Applicant: Robert Bosch GmbH, 70442 Stuttgart (DE)
(72) Inventor: Schmidt, Helmut, 74321 Bietigheim-Bissingen (DE); Gorlin, Yelena, Menlo Park, California 94025 (US); Baldizzone, Claudio, 70174 Stuttgart (DE)

(57) **Abstract**

A direct air capture of CO₂ system includes a first reaction reactor configured to sequester CO₂ from ambient air via a fluid sorbent including one or more amino acids; and an in-situ bipolar membrane electrolyzer, connected to the first reaction reactor, configured to both (a) regenerate the fluid sorbent via chemical removal of CO₂ from the fluid sorbent and (b) react the removed CO₂ to a non-CO₂ end-product.

## Description

### TECHNICAL FIELD

The present disclosure relates to systems and methods for capturing of atmospheric carbon dioxide (CO₂) using a liquid sorbent and conversion of the captured CO₂ into end-products in-situ.

### BACKGROUND

CO₂ is a notorious greenhouse gas whose emissions have been sharply on the rise since the Industrial Revolution began in the 18^{th} century. Since then, CO₂ emissions have been a confirmed culprit in climate change around the world. Recent findings of the International Panel on Climate Change have proposed that CO₂ emissions should be halved by 2030 to avoid further negative impact on the planet. Various technologies have been developed to capture CO₂ such as atmospheric CO₂, but their drawbacks prevent realization of more widespread CO₂ sequestration.

### SUMMARY

In one or more embodiments, a direct air capture of CO₂ system is disclosed. The system may include a first reaction reactor configured to sequester CO₂ from ambient air via a fluid sorbent including one or more amino acids; and an in-situ bipolar membrane electrolyzer, connected to the first reaction reactor, configured to both (a) regenerate the fluid sorbent via chemical removal of CO₂ from the fluid sorbent and (b) react the removed CO₂ to a non-CO₂ end-product. The chemical removal may include reacting the fluid sorbent with hydroxyl ions. The fluid sorbent may be an aqueous solution including L-glycine. The bipolar membrane electrolyzer may operate in a reverse-bias mode. The bipolar membrane electrolyzer may include a cross-linked matrix with a dispersed vinyl monomer. The first reaction reactor and the bipolar membrane electrolyzer may be adjacent portions of a common vessel separated from each other by a divider. The bipolar membrane electrolyzer may include a catalyst having a transition metal. The fluid sorbent may bind the CO₂ from the ambient air in the form of a carbamate, bicarbonate, carbonate, or their combination.

In another embodiment, a direct air capture of CO₂ system is disclosed. The system may include a CO₂ sequestration reaction reactor including an aqueous solution with at least one amino acid having binding affinity for CO₂; and a bipolar membrane electrolyzer in fluid communication with the CO₂ sequestration reaction reactor, the system having two states including in the CO₂ sequestration reaction reactor, a first state of the aqueous solution binding CO₂ from ambient air in a form of a carbamate, bicarbonate, carbonate, or their combination; and in the regeneration reaction reactor, a second state of producing hydroxyl ions and protons via a water disproportionation reaction and regenerating the aqueous solution utilizing the hydroxyl ions. The bipolar membrane electrolyzer may operate in a reverse-bias mode. The second state may also include reducing the bound CO₂ to a non-CO₂ end-product. The second state may be catalyzed with one or more precious metals. The at least one amino acid may include a mixture of amino acids. The at least one amino acid includes L-Arginine where R is HN=C(NH₂)-NH-(CH₂)₃.

In yet another embodiment, a direct air capture of CO₂ system is disclosed. The system may include a first reaction reactor including an amino acid water-based solution configured to sequester CO₂ from ambient air; one or more conduits outletting the amino acid water-based solution from the first reaction reactor after binding the CO₂; and a plurality of second reaction reactors, each connected to at least one of the one or more conduits and configured to regenerate the amino acid water-based solution by removing the bound CO₂ while simultaneously utilizing the sequestered CO₂ to form one or more end-products. The plurality of second reaction reactors may include a bipolar membrane electrolyzer. The CO₂ may be bound as a carbamate, bicarbonate, carbonate, or a combination thereof on the amino acid water-based solution. Each second reaction reactor may receive a different volume of the amino acid water-based solution. The amino acid water-based solution may include a mixture of amino acids. The plurality of second reaction reactors may include reactors including different thermal and/or chemical conditions.

### BRIEF DESCRIPTION OF THE DRAWINGS

FIGURE 1 is a schematic view of a non-limiting example of an atmospheric CO₂ capture system according to one or more embodiment disclosed herein;
FIGURE 2 is a schematic view of another non-limiting example atmospheric CO₂ capture system according to one or more embodiment disclosed herein;
FIGURE 3 is a schematic view of another non-limiting example atmospheric CO₂ capture system according to one or more embodiment disclosed herein;
FIGURE 4 is a schematic view of another non-limiting example atmospheric CO₂ capture system according to one or more embodiment disclosed herein; and
FIGURE 5 is a schematic view of another non-limiting example atmospheric CO₂ capture system according to one or more embodiment disclosed herein.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the disclosure. Practice within the numerical limits stated is generally preferred. Also, unless expressly stated to the contrary: percent, "parts of," and ratio values are by weight; the description of a group or class of materials as suitable or preferred for a given purpose in connection with the disclosure implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed. Unless stated otherwise, the wt.% is based on the total weight of the substrate and the vol.% is based on the total volume of the substrate.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within +/- 5% of the value. As one example, the phrase "about 100" denotes a range of 100+/- *5, i.e.* the range from 95 to 105. Generally, when the term "about" is used, it can be expected that similar results or effects according to the disclosure can be obtained within a range of +/- 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4, ..., 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. Similarly, whenever listing integers are provided herein, it should also be appreciated that the listing of integers explicitly includes ranges of any two integers within the listing.

In the examples set forth herein, concentrations, temperature, and reaction conditions *(e.g.,* pressure, pH, flow rates, *etc*.) can be practiced with plus or minus 50 percent of the values indicated rounded to or truncated to two significant figures of the value provided in the examples. In a refinement, concentrations, temperature, and reaction conditions (e.g., pressure, pH, flow rates, *etc*.) can be practiced with plus or minus 30 percent of the values indicated rounded to or truncated to two significant figures of the value provided in the examples. In another refinement, concentrations, temperature, and reaction conditions *(e.g.,* pressure, pH, flow rates, *etc*.) can be practiced with plus or minus 10 percent of the values indicated rounded to or truncated to two significant figures of the value provided in the examples.

As used herein, the term "and/or" means that either all or only one of the elements of said group may be present. For example, "A and/or B" means "only A, or only B, or both A and B". In the case of "only A," the term also covers the possibility that B is absent, *i.e.* "only A, but not B".

It is also to be understood that this disclosure is not limited to the specific embodiments and methods described below, as specific components and/or conditions may, of course, vary. Furthermore, the terminology used herein is used only for the purpose of describing particular embodiments of the present disclosure and is not intended to be limiting in any way.

The term "comprising" is synonymous with "including," "having," "containing," or "characterized by." These terms are inclusive and open-ended and do not exclude additional, unrecited elements or method steps. The term "including" or "includes" may encompass the phrases "comprise," "consist of," or "essentially consist of."

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Also, the description of a group or class of materials as suitable for a given purpose in connection with one or more embodiments implies that the group or class of materials can "comprise," "consist of," and/or "consist essentially of" any member or the entirety of that group or class of materials. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

The term "alkyl" refers to a monovalent alkane derived radical containing from 1 to 100 carbon atoms, or more preferably 1 to 40 carbon atoms, or even more preferably 1 to 20 carbon atoms unless otherwise defined. Alkyl groups may be linearly arranged, branched, or cyclic. A branched alkyl refers to an alkyl group in which an alkyl group is attached to a linear alky chain. An alkyl group may be a saturated or unsaturated hydrocarbon. In other words, alkyl may refer to an alkenyl or alkynyl. A saturated hydrocarbon refers to a hydrocarbon containing single bonds whereas, an unsaturated hydrocarbon refers to a hydrocarbon containing one or more double or triple bonds. Examples of alkyl groups include but are not limited to methyl, ethyl, propyl, isopropyl, butyl, isobutyl, sec-butyl, tert-butyl, pentyl, hexyl, octyl, ethenyl, propenyl, butenyl, pentenyl, hexenyl, octenyl, butadienyl, propynyl, butynyl, pentynyl, hexynyl, and allenyl groups. An alkyl group may also include cycloalkyl groups such as cyclopropyl, cyclopentyl, or cyclohexyl. Alkyl is intended to include isomers thereof. An alkyl group may be substituted with multiple substituent groups. A substituent group may refer to a non-hydrogen group. For example, a substituent group may be but is not limited to a halogen, a hydroxyl, an alkoxy, an acetyl, phenyl, amino group, heteroatom, or heteroatom group.

The term "alkoxy" refers to an alkyl ether or aryl ether such as methoxy, ethoxy, n-propoxy, iso-propoxy, n-butoxy, iso-butoxy, sec-butoxy, tert-butoxy, and phenoxy.

The term "aryl" refers to a carbon-containing aromatic ring such as phenyl and heteroaryl refers to a carbon ring where at least one carbon is replaced with a heteroatom such as a nitrogen atom, oxygen atom, or sulfur atom.

The term "alkylaryl" refers to an aryl where at least one of the hydrogen groups is replaced with an alkyl.

The term "amino" or "amine" refers to the group -NR'R" (or NRR'R") where R, R' and R" are independently selected from the group consisting of hydrogen, alkyl, aryl, alkylaryl, or heteroaryl.

The term "R" may refer to hydrogen, alkyl, aryl, alkylaryl, heteroatoms, alkoxy, heteroaryl unless otherwise stated.

Many are targeting global net zero carbon emissions to avoid, stop, or mitigate human impact on climate. One developing technology that may be useful to achieve the reduction of carbon emission is carbon capture utilization and storage (CCUS). Conventionally, this involves a process of separating carbon emissions such as CO₂ before they are released into the atmosphere for storage or further utilization, which may also be referred to as point source or point of source carbon capture. These technologies often rely on higher concentration of CO₂ at the source of carbon emissions. For example, these techniques may be common among oil and gas companies, or energy companies involved in extracting and/or burning fossil fuels. For example, flue gas may be a point source of carbon emissions. Point of source technologies may be built into certain combustion technologies or be more appropriate for existing industrial facilities such as power plants.

Alternatively, atmospheric carbon capture or direct air capture (DAC) of carbon emissions such as CO₂ may be used to offset emissions in industries where it may be more difficult to abate or prevent release (*i.e.,* hard-to-abate sectors) such as the transportation industry *(e.g.,* shipping and aviation). In some respects, DAC can be more challenging because it involves extracting carbon emissions such as CO₂ at ambient conditions (*e.g.,* temperatures, pressure, concentrations) that are much lower than point of source techniques. Differences between point of source and DAC generally make point of source technologies inapplicable to DAC and vice versa. For example, technologies employed for point of source capture may have slow kinetics under ambient conditions which renders them inefficient or futile for DAC. Additionally, storage and/or further utilization of captured carbon (*e.g.,* CO₂) has conventionally been limited to point of source capture because efficiently extracting sufficient quantities from ambient air makes storage and further utilization difficult and/or expensive. In yet another example, DAC technologies may be implemented as large-scale facilities whereas point of source technologies may be retrofitted to existing facilities. Regardless, significant advances in these technologies may make them more promising to ultimately achieve carbon neutrality. For example, a U.S. patent application having Serial No. 18/162,326 filed on January 31, 2023, describes some advances in DAC and is hereby incorporated by reference in its entirety.

Traditional CO₂ capture involves using liquid sorbents, particularly amine-based solutions. Monoethanolamine (MEA) being the benchmark solvent due to its high reactivity with CO₂. Yet, traditional amine solvents have several significant drawbacks. One of the drawbacks is the high energy consumption required for solvent regeneration. The process of releasing captured CO₂ from the amine solution typically involves the application of heat, which can account for a substantial portion of the overall energy consumption of the CO₂ capture process. The high energy demand reduces the overall efficiency of the system and increases operational costs. Additionally, amine-based solvents can be highly corrosive, particularly when used in high concentrations or at elevated temperatures. This corrosion can damage the equipment used in the CO₂ capture process, leading to increased maintenance costs and potential downtime. The need for corrosion-resistant materials further adds to the capital expenditure.

Another drawback is solvent degradation. Amine solvents are prone to degradation over time, especially when exposed to impurities such as oxygen, sulfur compounds, and other contaminants present in the flue gas. The degradation results in the formation of harmful by-products, which can reduce the efficiency of the CO₂ capture process and necessitate frequent solvent replacement. The degradation products can also pose environmental and health risks. The combined effects of high energy consumption, corrosion, and solvent degradation contribute to the overall high operational costs of using liquid amines for CO₂ capture. The costs can be a significant barrier to the widespread adoption of this technology, particularly for industries with tight profit margins.

Furthermore, on the utilization and storage side, the CO₂ emissions captured by conventional carbon capture technologies are typically not directly usable as valuable products, with only a few niche applications currently available. Beyond the implementation of carbon credits, a more sustainable and economically viable approach to financing CO₂ removal from the atmosphere involves converting captured CO₂ into more useful and marketable end-products. These end-products may include carbon monoxide (CO), formic acid, methanol, and a variety of other carbon-based substances. By transforming CO₂ into valuable chemicals, industries can create a revenue stream that helps offset the costs associated with the carbon capture process. For instance, methanol can be used as a fuel or a feedstock in chemical manufacturing, while formic acid has applications in agriculture and leather production. Carbon monoxide, on the other hand, is a crucial component in the production of synthetic fuels and various industrial processes. Carbonates may be utilized in various industries such as construction or fertilizers.

Traditionally, to efficiently convert CO₂ to a useful end-product, the captured emissions must first be purified, pressurized, and transported to the conversion facility. Each of these steps incurs additional costs, losses, and challenges. Purification of CO₂ is a needed step to remove impurities that could hinder the efficiency of subsequent chemical reactions. This process often involves advanced filtration and separation technologies, which can be both energy-intensive and costly. Once purified, the CO₂ must be pressurized to facilitate its transport and subsequent chemical conversion. Pressurization requires significant energy input, adding to the overall cost and carbon footprint of the process. Transportation of CO₂ to conversion facilities presents another set of logistical challenges. Depending on the distance and the mode of transport such as pipelines, trucks, or ships, there are varying degrees of complexity, risks, and expense involved. Once at the conversion facility, the purified and pressurized CO₂ undergoes chemical reactions to transform it into valuable end-products. This stage requires sophisticated technology and catalysts to ensure high conversion efficiency and product yield.

Therefore, there is a need for a CO₂ capture system overcoming one or more drawbacks mentioned herein.

In one or more embodiment, a CO₂ capture system is disclosed. The system may be a system structured to sequester CO₂ from dilute sources. The system may be a DAC system. The system is arranged to capture CO₂ from air, atmosphere. The capture may be direct capture. The CO₂ may be anthropogenic CO₂, legacy CO₂, naturally produced CO₂, CO₂ from various sources such as decomposition CO₂, ocean release CO₂, respiration CO₂, industrial sources CO₂, deforestation CO₂, fossil fuel burning CO₂, transportation CO₂, fuel combustion CO₂, exhaust CO₂, the like, or their combination. Other sources of CO₂ may also be suitable for sequestration as described herein. Unless expressly indicated, it should be understood that the mechanism for sequestering CO₂ may occur through adsorption or absorption and is not particularly limited.

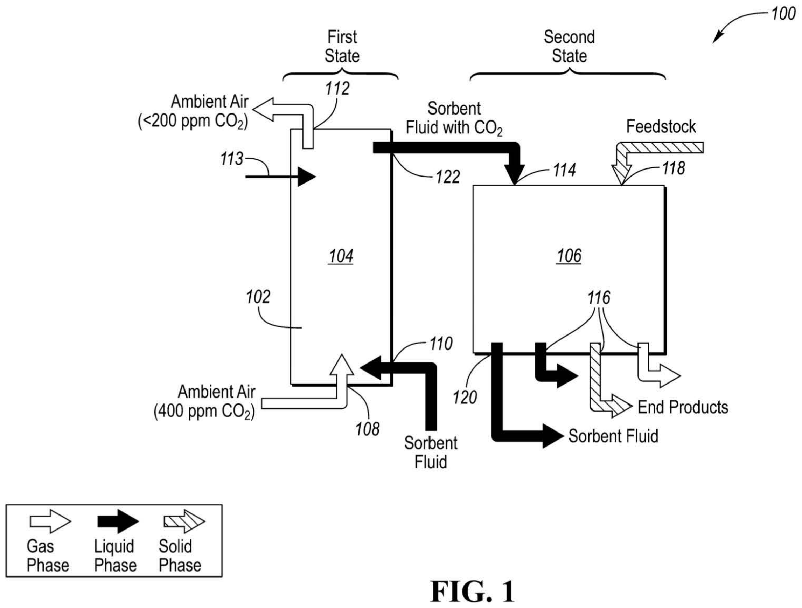

The system may have one or more portions, stages, states, or a combination thereof. The system includes several components. The various components described herein may cooperate mechanically, physically, chemically, fluidly, or a combination thereof, such that they are described as being in mechanical, chemical, and/or fluid communication to achieve the structure, functions, examples described herein. Non-limiting examples of the systems disclosed herein are shown in Figs. 1-5.

The system disclosed herein includes at least one container. The system may include 2, 3, 4, 5, 6, or more containers. But the system may include a single container or a single container with several subportions. The container may be a reaction reactor, tank, vessel, compartment, canister, capsule, tub, chamber, cistern, flask, receptacle, or the like. The container may be a closed, enclosable, openable, sealable, and/or resealable container.

The container may include or house a fluid CO₂ sorbent. The sorbent fluid may be primarily a liquid such as a solution, emulsion, or dispersion. The fluid sorbent may be a liquid. The fluid sorbent may be a water-based solution or be an aqueous solution. The liquid CO₂ sorbent may be a solvent.

The fluid sorbent or sorbent fluid may have at least one component with an affinity and/or selectivity for CO₂ such that the sorbent fluid sequesters CO₂ away from air. The sorbent is configured to have a selectivity and/or affinity for CO₂ such that it sequesters CO₂ from its gaseous state (*e.g.,* atmospheric air). For example, the sorbent may be configured to deplete a volume of atmospheric air to less than about 380, 350, 300, 280, 250, 225, or 200 ppm.

Thus, the sorbent fluid may be used to chemically bind CO₂ when contacted with air for a sufficient amount of time (*e.g.,* at least 1, 5, 15, 30, 45, or 60 minute). The sorbent fluid may be configured to sequester CO₂ from air at relatively low temperature (*e.g.,* less than about 50, 75, or 100°C), at relatively low pressure (*e.g.,* less than about 1, 2, 3, 4, or 5 atmospheres), and/or ambient conditions (*e.g.,* about 20 to 25°C and 0.5 to 1.5 atm). The CO₂ sequestration may be spontaneous under relatively low temperature and pressure or at ambient conditions such that an energy input is not necessary to facilitate sequestration/sorbing.

The CO₂ may bind to one or more components in the sorbent fluid such as to one or more functional groups in the sorbent fluid. The functional groups in the sorbent fluid may form a complex with CO₂.

The sorbent fluid may include one or more compounds having one or more nitrogen atoms. The sorbent fluid may include one or more nitrogen-containing or nitrogen-group compounds such as one or more amino acids. A component in liquid sorbent solution such as the nitrogen-group-containing compound or amino acid(s) may have an adsorption energy/enthalpy of about, at least about, or at most about 30, 35, 40, 45, 50, 55, 60, 65, 70, 75, 80, 85, 90, 95, 100, 102, 110, 115, or 120 kJ/mol.

An amino acid is an organic compound having both an amino functional group (-NH₂) and a carboxylic acid functional group (-COOH). Suitable amino acids may include alanine, arginine, asparagine, aspartic acid, cysteine, glycine, glutamic acid, glutamine, histidine, isoleucine, leucine, lysine, methionine, phenylalanine, proline, pyrrolysine, serine, selenocysteine, threonine, tryptophan, tyrosine, and valine. The R or L stereochemical configuration of the amino acids may be used. In a non-limiting example, L-arginine may be used. The amino acids may include a primary amine group or secondary amine group (proline). The amino acids may include the amino group in their "R" chain. The amino acids may include one or two primary amine groups in their structure.

Amino acid-based solvents offer promising solutions to challenges related to the implementation of amines as liquid sorbent. The amino acid-based solvents may be biodegradable and are less toxic compared to traditional or non-amino acid-based amines. The amino acid-based solvents exhibit lower volatility, reducing solvent losses and minimizing the risk of environmental contamination. The reduced volatility also means fewer emissions of harmful substances, making amino acid-based solvents a more environmentally friendly option. Additionally, amino acid-based solvents generally have higher thermal and oxidative stability compared to traditional amines. This increased stability reduces the rate of solvent degradation, leading to fewer harmful by-products and a longer solvent lifespan. As a result, the need for frequent solvent replacement is minimized, lowering operational costs, and reducing environmental impact.

Besides amino acids, the liquid sorbent may include one or more additional components. The additional compounds may be added to facilitate CO₂ transfer and/or influence the chemical form of the CO₂ in the fluid. The additional compounds may include amines, a neutralizing base, a carbonate, or their combination. The sorbent fluid may be free of additional compounds such as one or more amines, neutralizing bases, or carbonates.

An amine is a compound having a nitrogen atom with a lone pair of electrons. The nitrogen atoms in the sorbent fluid are not merely nitrogen gas (*e.g.,* N₂). The amine may include a primary amine, secondary amine, tertiary amine, or their combination. The amines may have a formula R-NH₂, R₂-NH, or R₃-N. The amines may include aqueous amines, water-lean amines, amidines, guanidine and its derivatives, and/or mixtures thereof with one or more amino acids.

Aqueous amines include amines that may be used to form water-based solutions of amines. Aqueous amines may include amines miscible and/or soluble in water. Aqueous amines may have a solubility of at least 1, 10, 100, 500, or 1000 mg/L at 25°C. Non-limiting examples of suitable aqueous amines may include monoethanolamine (MEA), diethalolamine (DEA), triethylamine (TEA), triethanol amine (TEOA), ethylenediamine (EDA), diethylenetriamine (DETA), triethylenetetramine (TETA), 2-(2-Aminoethyl-amino)ethanol (AEEA), Methyldiethanolamine (MDEA), 2-amino-2-methyl-1-propanol (AMP), Diisopropanolamine (DIPA), piperazine (PZ), piperazine derivatives, or their combination.

Water-lean may refer to compounds that do not intentionally include water, compounds that only have insignificant or trace amounts of water or are free of water. For example, a water-lean amine may include a mixture of an organic diluent and an amine. Water-lean may refer to compounds with low water content such as less than about 0.01, 0.1, 0.5, or 1% by weight, based on a total weight of the compound. Water-lean components may include organic solvents, alcohols, or a mixture thereof. The one or more water-lean amines may be liquid at room temperature and be referred to as amine or water-lean amine solvents. For example, suitable water-lean amines may include N-(2-ethoxyethyl)-3-morpholinopropan-1-amine (EEMPA); N1-(2-ethoxyethyl)-N2,N2-diisopropylethane-1,2-diamine (EEDIDA), 3-methoxy-N-(pyridin-2-ylmethyl)propan-1-amine (MPMPA), or 2-morpholino-N-(pyridin-2-ylmethyl)ethan-1-amine (MPMEA). The water-lean amine may include a compound represented by formula (1):

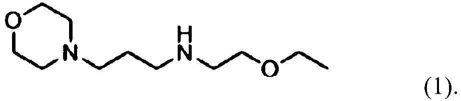

The water-lean amine may include a compound represented by formula (2):

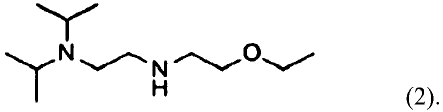

The water-lean amine may include a compound represented by formula (3):

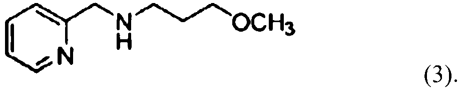

The water-lean amine may include a compound represented by formula (4):

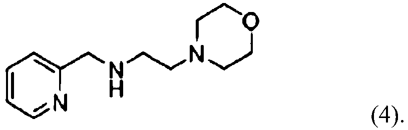

The water-lean amine may be a mixture of two or more of the compounds represented by formulas 1-4.

Amidines are organic compounds with the functional group RC(NR)NR₂, where the R can be the same or different. Amidines include two nitrogen atoms. Amidines are the imine derivatives of amides (RC(O)NR₂). Non-limiting example amidines include formamidine with the formula of HC(=NH)NH₂, diminazene, benzamidine with the formula C₆H₅C(NH)NH₂, pentamidine, paranyline, or the like.

Guanidine is a compound with the formula HNC(NH₂)₂. Guanidine is a strong base which dissolves in polar solvents. Guanidine derivatives, guanidines, are a group of organic compounds sharing a common functional group with the general structure of (RiR₂N)(R₃R₄N)C=N-R₅ and having a central bond of an imine. Examples of guanidines includes arginine, triazabicyclodecene, and creatine.

The one or more amino acids may be present in an amount of about, at least about, or at most about 5, 6, 7, 8, 9, 10, 11, 12, 13, 14, 15, 16, 17, 18, 19, 20, 21, 22, 25, 30, 35, 40, 45, 50, 55, 60, 65, 70, 75, 80, 85, 90, 95, 99, or 100 % by weight of the sorbent fluid. The one or more amino acids may be present in an amount of about 5-90, 10-75, or 25-45 wt.%, based on the total weight of the sorbent fluid. The weights and/or concentrations described herein with reference to the liquid sorbent solution before or after sequestering CO₂, however, unless explicitly mentioned, the amount refers to weights or concentrations pre-sequestration.

The one or more amino acids may be present in a concentration of about, at least about, or at most about 0.5, 1, 1.5, 2, 2.5, 3, 3.5, 4, 4.5, 5, 5.5, 6, 6.5, 7, 8, 9, 10, 11, 12, 13, 14, 15, 16, 17, 18, 19, 20, 21, 22, 23, 24, or 25 M. The one or more amino acids may be present in an amount of about 2-20, 4-15, or 6-9 M.

A neutralizing agent such as a neutralizing base is a compound with a general formula MOHₓ, where M belongs to the alkali or alkaline earth metals. For example, a salt such as sodium hydroxide (NaOH) and/or potassium hydroxide (KOH) may be used in an amount sufficient to neutralize the one or more nitrogen-group containing compounds.

A carbonate is a compound with the general formula MₓCO₃, where M belongs to the alkali or alkaline earth metals. In a non-limiting example, a carbonate may be calcium carbonate (CaCO₃), a calcium-magnesium carbonate or dolomite (CaMg(CO₃)₂), potassium carbonate or potash (K2CO3), sodium carbonate Na₂CO₃, or their combination.

The system may include several states, stages, or phases. In the first state, the liquid sorbent reacts spontaneously with CO₂ to separate CO₂ from the incoming air. During the first phase, the sorbent is effectively loaded with CO₂ in a reaction reactor. The reaction reactor includes an internal volume configured to hold the liquid sorbent to be mixed with incoming air including a first concentration of CO₂. The reaction reactor may also be referred to as a sequestration reactor or first reactor.

The loading of the sorbent with the CO₂ may be tailored to meet the system requirements, typically ranging between about 10-100, 20-90, or 30-80% of the sorbent capacity. An efficient contact between the CO₂-laden air and the sorbent in the first reactor, especially its amine functionality, should be maintained for an adequate time interval to maximize CO₂ sequestration. The CO₂ may be bound in the form of carbamate, bicarbonate, carbonate, or a combination thereof.

The first reactor also includes an outlet for the air from which CO₂ was sequestered. The outgoing air may have a second concentration of CO₂ which is lower than the first CO₂ concentration.

In the second phase or state, the sorbent is subsequently transferred to a second container or a second portion of the first reaction reactor. The second container or portion may be a sorbent regeneration device, a CO₂ conversion device, or both. The second reactor or portion may also be referred to as a second reaction reactor. In the second reactor, the sorbent fluid may be regenerated and the chemically bound CO₂ may be converted into one or more useful end-products. The conversion may be chemical, thermal, thermochemical, electrochemical, or their combination. The regenerated sorbent fluid may be reentered into the system, specifically be returned to the first reactor. The regeneration of the fluid sorbent may be utilizing one or more intermediates or products from the conversion reaction, for example hydroxyl ions (OH⁻), protons, electrons, or a combination thereof produced in the chemical process of the second reactor.

The sorbent fluid may be looped, recirculated within the system.

The end-product may be non-gaseous, gaseous, liquid, solid, high-value, non-CO₂, or a combination thereof. The end-product may include the carbon atom from the sequestered and captured CO₂, thus binding the carbon from the ambient air in a non-CO₂ form. The end-product may include oxygen, carbon monoxide, an alcohol such as methanol, a carboxylic acid such as formic acid, or another carbon-based substance.

A non-limiting example of the system is shown schematically in Fig. 1. As can be seen, the system 100 of Fig. 1 may utilize a fluid sorbent 102 which may be shared and/or cycled between a first reaction reactor 104 and a second reaction reactor 106. The first and second reaction reactors 104, 106 may be physically separated from one another, but be in a fluid communication with each other, as is shown in Fig. 1. The first and second reaction reactors 104, 106 are part of the same system in such spatial proximity to each other that they are considered in-situ. CO₂ is captured by the fluid sorbent 102 from an air input stream, depicted coming from an inlet 108, containing CO₂ having a first concentration. The fluid sorbent 102 may be present in the first reaction reactor 104 at the start of the process, such that air is injected into the sorbent fluid. Alternatively, the air may be entered into the first reactor 104 as the first substance, and the fluid sorbent 102 may be provided into the first reactor 104 afterwards for mixing with the air. The fluid sorbent entry may be via an inlet 110. Alternatively, the ambient air and the fluid solvent may be provided into the first reactor 104 at the same time, continuously, in batches, or a combination thereof. The air with a second concentration of CO₂, lower than the first concentration, is released from the system via an outlet 112.

The sorbent fluid 102 is then released from the first reaction reactor 104 via an outlet 122 and entered into the second reactor 106 via an inlet 114, where it is regenerated by removal of CO₂. The released CO₂ is reacted in the second reactor 106 to form one or more end-products which may be released via one or more outlets 116. Any chemical compounds needed for the reaction utilizing the captured CO₂ may be supplied via one or more inlets, for example an inlet 118. The regenerated fluid sorbent may be released via an outlet 120.

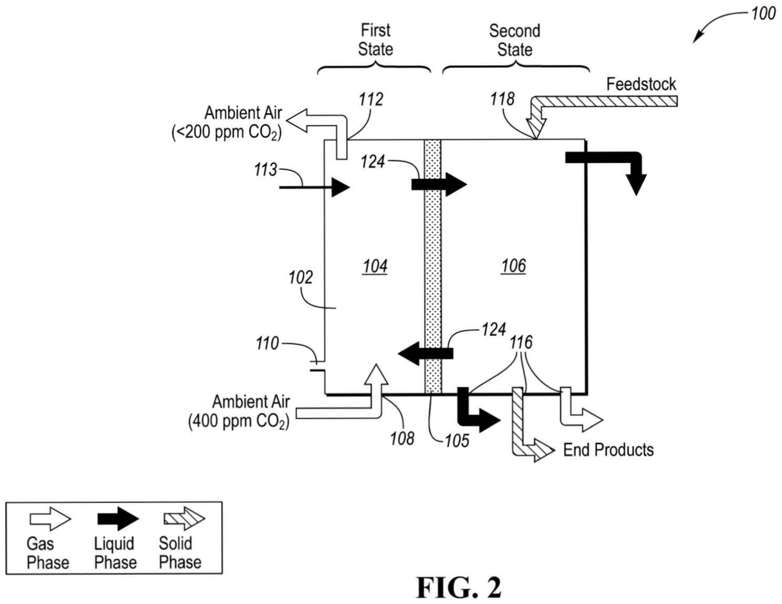

In an alternative embodiment, shown schematically in Fig. 2, the first reaction reactor 104 is immediately adjacent the second reaction reactor 106. Alternatively still, the first reaction reactor 103 may have two chambers or compartments 104, 106 with a divider 105. The divider may be configured to release, move, cycle, recirculate the sorbent fluid 102 between the two compartments 104, 106. This configuration presents a system with increases spatial efficiency and mechanical simplification. This embodiment may be especially suitable when the conversion includes ambient temperatures or similar temperatures and pressures in both compartments 104, 106.

In the system of Fig. 2, the sorbent fluid crosses the divider 105, which may be a barrier. The barrier may be physical, chemical, mechanical, or a combination thereof. The barrier may be a wall with one or more permeable portions, or the like, 124 which are configured to release the CO₂-enriched fluid sorbent from compartment 104 into the compartment 106 at a predetermined time or interval. The same or different permeable portion 124 may release the regenerated fluid sorbent 102 from the compartment 106 to the compartment 104 at a predetermined time or interval.

In the system of Fig. 2, the first state may include influx of CO₂-laden air, fluid sorbent binding the CO₂, and release of the air. Afterwards, the CO₂-enriched air may be provided into the compartment 106, where the CO₂ is unbound from the fluid sorbent. The regenerated fluid sorbent may be then released from the compartment 106. The end-product may be produced during the fluid sorbent regeneration or afterwards. For example, certain feedstock may be supplied prior to, during, or after the input of the CO₂-enriched air into the compartment 106. The end-product(s) in the first cycle may be produced after the sorbent fluid was provided from the compartment 106, while the fluid sorbent is back in the compartment 104 and sorbing CO₂ in the second cycle, or both.

In the systems disclosed herein, one, one or more, or more than one volume of the sorbent fluid may be used. Having multiple fresh (unexposed) volumes may improve kinetics of sequestering CO₂ from air. For example, a first volume of the sorbent fluid 102 may sequester CO₂ in the first compartment 104 and be provided to the compartment 106. At the same time, a second volume of the sorbent fluid 102 may enter the compartment 104 for CO₂ sequestration while the first volume of the sorbent fluid is being regenerated in the compartment 106. Two or more different volumes of the sorbent fluid may be cycling the system. The first, second, *etc.* volumes may have the same or different chemical composition, molarity, volumetric quantity, chemical properties, physical properties, sequestration capacity, or their combination. For example, the sorbent fluid volumes may be tailored for the system requirements, predetermined factors such as CO₂ load, or the like.

The volumes may be the same or different, for example regarding their composition, presence or absence of the neutralizing agent, molarity, quantity, CO₂-sequestering power, the like, or their combination. In a non-limiting example, both the first and second volumes of sorbent fluids may include the same amino acid mixture. In another non-limiting example, the first volume of the sorbent fluid may have better kinetics when the sorbent has high saturation, and the second volume of the sorbent fluid may have better kinetics when the sorbent has low saturation. In a non-limiting example, the first volume of sorbent fluid may include a mixture of an amino acid with an alcohol and an amidine, and the second volume of the sorbent fluid may include an amino acid mixture.

The second reactor may serve two functions: (1) regeneration of the sorbent fluid and (2) in-situ conversion of captured CO₂ into an end-product which includes consumption of the sequestered/captured CO₂. The second reactor is thus a dual-function device. The functions (1) and (2) may be simultaneous or consecutive. The second reactor is an in-situ reactor. In other words, the second reactor is physically a part of the disclosed system, adjacent or in the vicinity of the first reactor 104. Because the system includes an in-situ conversion device, the system thus bypasses the need for a purified CO₂ intermediate, pressurization, and transport, hence increasing efficiency. The system may operate in a loop, allowing for continuous recycling of the fluid sorbent. The system may be configured as a batch process or a continuous operation system. The system may thus support circular economy and contribute to climate change mitigation.

The second reactor may be a mineralization reactor. A mineralization reactor is a vessel used to chemically convert CO₂ into carbonate such as calcium carbonate (CaCO₃) through a process called mineralization. Unlike naturally occurring mineralization which takes hundreds or thousands of years in which minerals inside rocks react with atmospheric CO₂ to create carbonates, the process in the mineralization reactor facilitates accelerated reactions between CO₂ and the minerals, resulting in a secure storage of CO₂.

The mineralization process may utilize alkaline feedstock to react with concentrated CO₂. The alkaline feedstock may include coal fly ash, steel slag, industrial alkaline waste, alkaline mine tailings, industrial by-products, mined rocks such as alkaline rocks rich in iron, calcium, magnesium, a calcium-rich material, or a combination thereof. The alkaline feedstock may include one or more oxides such as calcium oxide (CaO). The alkaline feedstock may assist with the regeneration, be a source of calcium ion, or both. The alkaline feedstock may be in the form of crushed particles.

The reactions in the mineralization reaction may be facilitated at ambient temperature and relatively low pressure or relatively high pressure, high temperature, or both. The temperature of the mineralization reaction may be about 15-90, 25-80, or 35-70°C. The reactions at ambient temperature for CO₂ storage in a solid form present an advantage in comparison to processes requiring high temperatures and pressures above ambient conditions.

In the mineralization reactor, CO₂ is reacted with divalent cations to create stable carbonate minerals. The resulting carbonate minerals may be further utilized in a variety of applications such as cement ingredients, fertilizer, source material for paper and paint. The system may include a precipitation tank to remove the carbonate product in a solid form. The system may also include a filter to separate the regenerated sorbent fluid before the fluid is returned for further sequestration. A non-limiting example may be production of CaCO₃ from CO₂ and CaO. An alkaline feedstock is brought into the mineralization reactor to facilitate a reaction with the CO₂ and generate an end-product such as CaCO₃.

The second reactor 106 may be a conversion unit in which the captured CO₂ is reduced through a thermal, chemical, thermochemical, or electrochemical pathway.

In the thermochemical pathway, the CO₂-laden fluid may be subjected to temperatures between about 50 and 200°C and/or pressures above about 1 bar in the presence of a catalyst, such as those based on silver (Ag), copper (Cu), gold (Au), nickel (Ni), platinum (Pt), palladium (Pd), gallium (Ga), or ruthenium (Ru) on different supports including zinc or aluminium oxides (ZnO and Al₂O₃). Other catalysts and oxides are contemplated.

The appropriate combination of a catalytic system, temperature, and pressure may be selected to yield the desired end-product. For example, for CO production, the catalyst may include one or more precious metals. The catalyst may include Au, Ag, Zn, Pd, Ga, or a combination thereof. For syngas production, the catalyst may include Ga, Pd, or a combination thereof, a mixture of one or more of Au, Ag, Zn, Ni, Fe, Pt, Ir, Ru, Rh, and Ti. For formic acid production, the catalyst may include Pb, Hg, Tl, In, Sn, Cd, or a combination thereof. For other products, Cu catalyst or Cu alloyed with other metals may be used.

The thermochemical pathway may be realized in the second reactor or second compartment. A catalytic system, elevated temperature, elevated pressure, or their combination may be present in the reactor or supplied to the reactor. The same or similar catalyst(s) as those named above with respect to the thermochemical pathway may be used. The end-products' chemical composition depends on the type of catalysts, temperature, and pressure introduced into the second reactor. The end-products may include gaseous, liquid, solid products, or their combination.

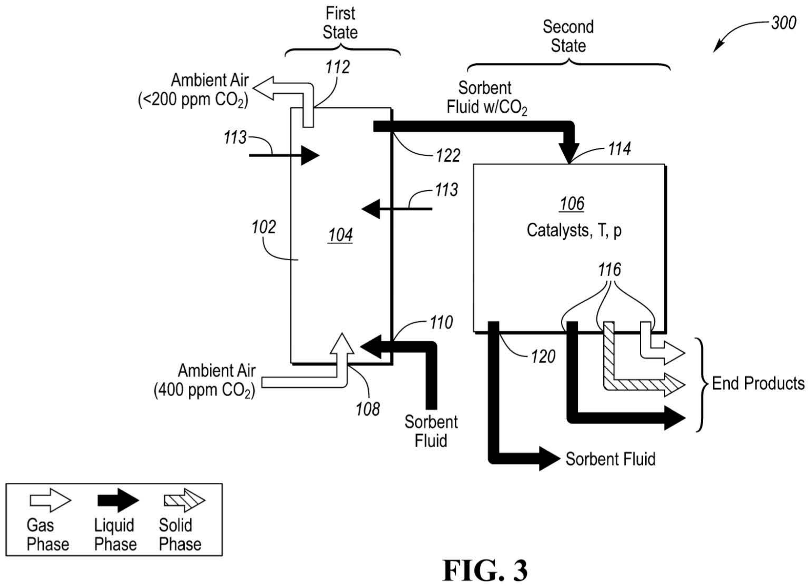

A non-limiting depiction of the thermochemical reaction pathway is shown in Fig. 3. The system 300 includes a first reaction reactor 104. The first phase takes place in the first reaction reactor 104. The second phase takes place in the second reaction reactor 106 which is also a conversion reactor for the captured CO₂. As was indicated above, the system may include a common reaction reactor having two adjacent compartments instead of two discreet vessels, analogous to Fig. 2.

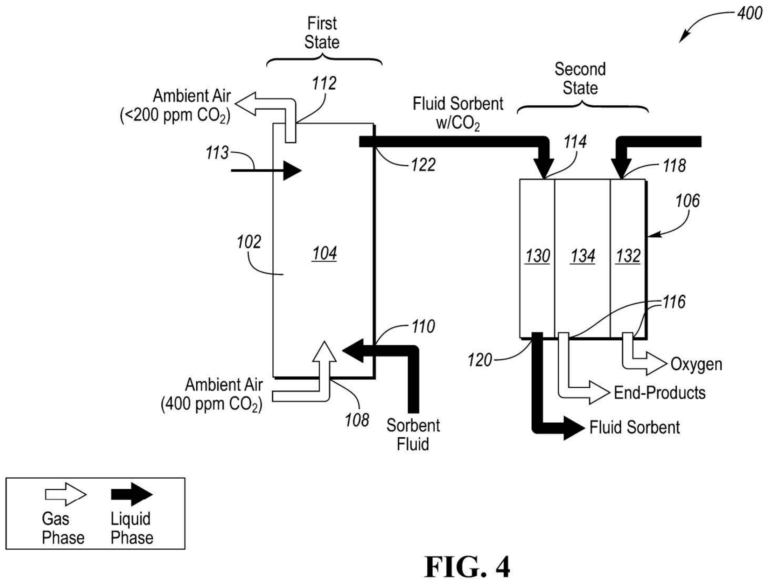

In the electrochemical pathway, the sorbent fluid may be introduced into an electrolysis cell or an electrolyzer, a non-limiting example of which is shown in Fig 4. Electrolyzers use electrical energy to conduct chemical reactions. Electrolyzers undergo an electrolysis process to split water into hydrogen and oxygen. An electrolyzer may include an electrolyte membrane (ion exchange membrane), an anode layer, and a cathode layer separated from the anode layer by the electrolyte membrane.

At the anode, an oxidation reaction occurs (e.g., oxygen evolution, H₂O or OH⁻ being hydrolyzed to O₂ (2H₂O → O₂ + 4H⁺ + 4e⁻ or 4OH⁻ → O₂ + 2H₂O + 4e⁻). At the cathode, the chemically bounded CO₂ is electrochemically reduced to various end-products in the presence of a catalyst such as those disclosed herein.

A non-limiting example system including an electrolysis cell is shown in Fig. 4. The system 400 includes a first reaction reactor 104, in which the first phase takes place. The second phase takes place in the second reaction reactor 106, which is an electrolysis cell in this embodiment. The cell 106 includes a cathode 130, anode 132, and a membrane 134 dividing the electrodes 130 and 132. The end-products may include various reaction products including gas phase such as oxygen. The regenerated sorbent fluid may be returned to the reaction reactor 104.

The second reactor may include one or more bipolar membrane electrolyzers. Bipolar membranes are polymeric membranes having two layers, a negatively-charged cation exchange layer and a positively charged anion-exchange layer. Bipolar membranes can selectively transport both cations and anions simultaneously. The interface of the two layers is an interfacial layer or a bipolar junction. Unlike monopolar membranes, bipolar membranes do not facilitate ion transport across the membranes. Instead, the bipolar membranes facilitate a disproportionation reaction during which water electro-dissociates into protons and hydroxide ions at the bipolar junction. An additional difference is that the electron-dissociation of water is in the membrane with no gas formation.

The electrolyzer(s) may operate in a reverse-bias mode. In the reverse-bias mode, the cation-exchange membrane is facing the cathode, and the anion-exchange membrane is facing the anode. Since neither type of ions is able to pass both layers of the bipolar membrane, the orientation of the membrane with respect to the electrodes determines products generated by applying current across the bipolar membrane. Under the reverse bias or reverse polarization, there is a flow of H⁺ and OH⁻ ions along the electric field, and the generated protons and ions leave the bipolar membrane via their respective layers, specifically H⁺ through the cation-exchange membrane and OH⁻ through the anion-exchange membrane. Under the reverse bias, the bipolar junction is depleted of ions and subsequently, water dissociates into H⁺ and OH⁻ ions. As a result, an acid is produced on one side of the bipolar membrane, and a base is produced on the opposite side. By water dissociation at the membrane interface, the protons and hydroxyl ions are produced and, respectively, provided to the cathode for CO₂ reduction and to the anode for oxygen evolution.

The bipolar membrane may include a functionalized polymer matrix. The matrix may include dispersed vinyl monomer. The matrix provides mechanical support and serves as a carrier for polyelectrolyte groups. The functionalization may include multi-functional groups. The matrix may be crosslinked. The membrane may also include a supporting matrix, for example, from a cloth to provide mechanical support.

The cation-exchange layer may include sulfonic acid groups, phosphonic acid groups, carboxylic groups, the like, or their combination. The cation-exchange layer may include polystyrene, poly(p-phenylene oxide), sodium alginate, modified chitosan, polyvinyl chloride, polyether ether ketone, the like, or their combination.

The anion-exchange membrane may include a polystyrene or polysulphone matrix with anionic groups such as quaternary ammonium salts, imidazolium salts, tertiary amines, secondary amines, diamines.

To accelerate the water dissociation reaction in the bipolar membrane electrolyzes, organic and/or inorganic catalysts may be added. Non-limiting example catalysts may include polyelectrolytes having functional groups such as pyridyl, amino, carboxy, sulphonic, ammonium, oxides, hydroxides, transition metal hydroxides, salts, complexes, graphene oxide, metal compounds such as Ca²⁺, Mg²⁺, the like, or their combination.

In the system disclosed herein, the sorbent fluid may be depleted of the chemically bound CO₂ to an extent determined by the overall system requirements, typically ranging between about 10-100, 20-90, or 30-70% and is then regenerated for the next adsorption cycle. Simultaneously, the desired end-products may be collected, purified, stored, used in production, or a combination thereof.

The first and second reaction reactors may include one or more inlets and one or more outlets. For example, the reactor 104 may include a first inlet 108 to receive a gaseous supply stream/input of air and a first outlet 112 to expel or release the gaseous supply. The first reactor 104 may further include a second inlet 110 to receive the sorbent fluid such as from the second reactor 106 and a second outlet 122 for discharging the CO₂-enriched sorbent fluid from the first reactor 104 and transferring it to the second reactor 106. The first reactor 104 may also have an inlet for any feedstock or chemical compounds needed to assist the sequestration. The chemical compounds may be a part of the fluid sorbent. Alternatively or in addition, additional chemical compounds may be supplied to the sorbent fluid as needed.

Likewise, the second reactor may include one or more inlets and one or more outlets. For example, the device 106 may include a first inlet 114 for ingress of the CO₂-enriched sorbent fluid and a second inlet 118 for input of feedstock. The reactor 106 may also include a first outlet 120 for egress of the sorbent fluid after being regenerated and a second outlet 116 for collection of end-products.

The first and second reaction reactors may further include one or more conduits connecting the reactors with each other. For example, the system may share a single conduit leading the sorbent fluid back and forth between the first and second reactors. Alternatively, the system may include two separate conduits, a first conduit for taking the enriched sorbent fluid from the first reaction reactor to the second reaction reactor and a second conduit for taking the regenerated sorbent fluid from the second reactor to the first reactor.

The first and second inlets may be separately sealable such that during a first period of time, the first inlet may permit a gaseous stream to enter the compartment and contact the sorbent while the second inlet is sealed. During a second period, the first inlet may be sealed while the second inlet is opened to flood the air/compartment with the sorbent fluid. Similarly, the first and second outlets may be selectively sealable for filling the compartment with a gaseous stream/sorbent fluid or expelling/draining the compartment of the gaseous stream/the sorbent fluid.

The same aperture or port may serve as the inlet and outlet for gaseous stream and/or the sorbent fluid. The reactors may provide a closed environment by being selectively contained, sealable, or sealed. In other words, the gas supply may be immobilized in the reaction reactor for a time sufficient for the fluid sorbent to remove and sequester CO₂ therefrom. Alternatively, a continuous stream of air may be supplied.

During the first state, exposure of the CO₂ to the sorbent may be carried out until a threshold saturation level and/or capacity is achieved or duration of time sufficient for sorption is met. During the second state, removal of the CO₂ from the fluid sorbent may be carried out until a threshold saturation level/limit/point and/or capacity is achieved or duration of time sufficient for regeneration is met. The exposure in either state may be carried out for a predetermined amount of time.

The threshold point/limit may be a reduction/increase in sequestering capacity by at least about 10, 15, 20, 25, 30, 35, 40, 45, 50, 55, 60, 65, 70, 75, 80, 85, 90, 95, 98, or 99%. The threshold saturation level/limit/point may be at least about 10, 15, 20, 25, 30, 35, 40, 45, 50, 55, 60, 65, 70, 75, 80, 85, 90, 95, 98, or 99% of the sorbing capacity. A period of time sufficient to achieve a threshold limit or range may be employed. For example, the sorbent may be exposed to a gaseous component for a duration of time sufficient to utilize at least about 10, 15, 20, 25, 30, 35, 40, 45, 50, 55, 60, 65, 70, 75, 80, 85, 90, 95, 98, or 99% of the sorbing capacity of the sorbent fluid. In a non-limiting example, exposure may occur for duration of time sufficient to utilize about 20 to 90, 30 to 85, or 45 to 80% of the sorbing capacity, based on real, historical, or predicted conditions such as temperature, humidity, pressure, and the composition of atmospheric air.

The sorbent fluid may be thus provided for regeneration after the sorbent reaches saturation or a threshold saturation for sorbing CO₂ or after a (e.g., predetermined and/or predicted) duration of time. The sorbent may be exposed to atmospheric air for a duration of time sufficient to sorb CO₂ beyond the threshold before the sorbent is provided for regeneration. Similarly, the removal of CO₂ from the sorbent fluid in the second reactor may be carried out for a time sufficient to achieve a threshold desaturation of the sorbent fluid or free up a threshold capacity of the sorbent before the sorbent fluid containing sequestered CO₂ is removed from the second reactor. A loaded/charged/CO₂ laden sorbent fluid may be removed, evacuated, extracted from the second reactor after a threshold level is achieved and/or after a (predetermined/predicted) duration of time. The steps of contacting the air to the fluid sorbent may be repeated one or more times to extract CO₂ from the air. Different streams/volumes of the same or different sorbent fluids may be used.

The second reaction reactor may be sized to hold a volume of sorbent fluid configured to regenerate the fluid sorbent in one, two, three, or more passes. The first and second reaction reactors may be sized to hold a volume of a sorbent fluid such that the transfer of CO₂ from the air to the sorbent and from the sorbent is kinetically efficient.

As the sorbent may spontaneously sequester CO₂ from ambient air under ambient conditions, the sorbent, first reaction reactor, second reaction reactor, system, or their combination may be free of a heating element for heating the sorbent. In a conventional system, a heating element may be present in the CO₂ sorption device, for example for regeneration of the sorbent.

The herein-disclosed system may include a heating element, exclusively or only, in the second phase or in the second reaction rector. In one or more embodiments, even the second reaction reactor may be free or a heating element. For example, if the second reaction reactor is a mineralization reactor, the second reaction reactor may be free of a heating element and thus free of an elevated temperature, pressure, or both. If the second reaction reactor is a conversion device, the second reaction reactor may include one or more heating elements to facilitate temperature sufficient for the conversion processes including a thermal, thermochemical, or electrochemical reaction.

The heating elements may be placed inside, outside, or both with respect to the second reaction reactor. The heating elements may be internal or external to the second reactor. The second reactor may be structured as a pressurized vessel.

The first reaction reactor, second reaction reactor, or both may be flooded with the sorbent fluid such that it is filled to about, at least about, or at most about 30, 50, 60, 75, 80, 85, 90, 95, 98, or 99% of its volumetric capacity.

The processes described herein may be repeated continuously or as batches. Repetitions of the first and second phases may be repeated a plurality of times *(e.g.,* 2, 3, 4, 5, 6, 7, 8, 9, 10) before proceeding to regeneration. Regeneration may be repeated a plurality of times to fully *(e.g.,* 2, 3, 4, 5, 6, 7, 8, 9, 10) regenerate the sorbent fluid before contacting the regenerated sorbent fluid with air in the first reactor again. The regenerated sorbent fluid may be cooled or heated before being reintroduced to the first reactor.

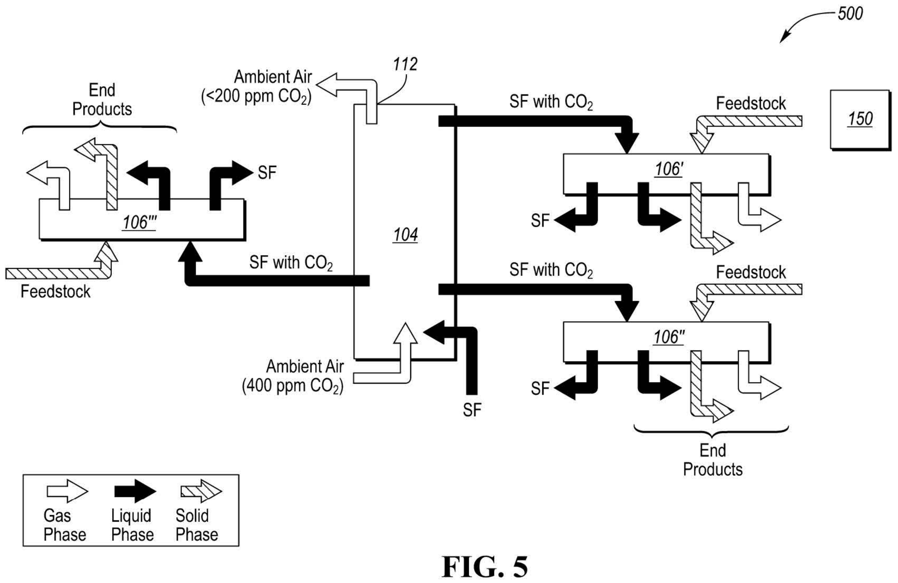

The system may also include one or more or more than one first reactor, second reactor, or both. For example, the system may include one or more second reactors fluidly connected to a first reactor. A non-limiting example of such system is shown in Fig. 5. Fig. 5 shows a first reaction reactor 104 which includes a sorbent fluid (SF) for CO₂ sequestration. Once enriched with the CO₂, the sorbent fluid is distributed to one, two, or three of the three second reactor units 106', 106", and 106‴.

The second reactors may represent the same or different type of a CO₂ conversion. In other words, the second reactors may have the same or different components such as cathodes, anodes, membranes, catalyst systems, heaters, pressurization, the like, or their combination. The second reactors may utilize the same or different type of chemical, thermal, thermochemical, electrochemical reactions. As a result, the system may utilize the same or different types of feedstock, produce the same or different types of products, result in the same or different degree of efficiency, sorbent regeneration, or a combination thereof. Different volumes of the fluid sorbent may be supplied to different types of the second reactor. Efficiency of the system may be thus tailored in real-time based on the CO₂ sequestration efficiency or other factors such as a need for a specific end-product.

One or more steps described herein may be performed by a controller including a non-transitory memory with computer-executable instruction stored thereon and a processor for executing the computer-executable instructions. A non-limiting example of a controller 150 is shown in Fig. 5. The steps such as sequestration or regeneration may be based on predicted conditions rather than actual conditions or based on proxy parameters. Predictions may be based on algorithms such as a machine learning algorithm. A machine learning algorithm may be implemented using artificial intelligence. The machine learning algorithm may be an algorithm that improves its accuracy through experience. The machine learning algorithm may enable one or more embodiments to learn and improve from the previous experience, and/or the data described herein without explicit programming. The machine learning algorithm may be a neural network algorithm. Neural networks, random forests, support vectors, k-nearest neighbors, symbolic regression algorithms may be trained to recognize complex patterns within the data and learn to represent non-linear relationships between the data and predict trends. The machine learning algorithm may be implemented as machine instructions on non-transitory memory stored on a computer where the machine instructions are to be executed by the computer.

For example, historical, predicted, or current weather or environmental conditions may be used to predict CO₂ concentration in ambient air, the appropriate duration of time for sequestration, improve efficiency of the systems described herein, or a combination thereof.

The processor may include one or more devices selected from high-performance computing systems including high-performance cores, microprocessors, micro-controllers, digital signal processors, microcomputers, central processing units, field programmable gate arrays, programmable logic devices, state machines, logic circuits, analog circuits, digital circuits, or any other device that manipulate signals (analog or digital) based on computer-executable instructions residing in the memory. The memory may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. The non-volatile storage may include one or more persistent data storage devices such as a hard drive, optical drive, tape drive, non-volatile solid-state device, cloud storage or any other device capable of persistently storing information.

Executable instruction may reside in a software module. The software module may include operating systems and applications. The software module may be compiled or interpreted from a computer program created using a variety of programming languages and/or technologies, including, without limitation, and either alone or in combination, Java, C, C++, C#, Objective C, Fortran, Pascal, Java Script, Python, Perl, and PL/SQL. Non-volatile storage may also include data supporting the functions, features, calculations, and processes.

Computer readable storage media (e.g., memory), which is inherently non-transitory, may include volatile or non-volatile, and removable and non-removeable tangible media implemented in any method or technology for storage of information, such as computer-readable instructions, data structures, program modules, or other data. Computer readable storage media may further include RAM, ROM, erasable programable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device form of a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement functions, acts, and/or operations described herein. The functions, acts, and/or operations described herein may be re-ordered, processed serially, and/or processed concurrently.

### EXAMPLES

### Example 14-1E - reactions in the first reactor

The system included the first reactor, as described in Figs. 1-5. The process began by contacting ambient air containing about 400 ppm CO₂ with a water-based solution containing at least one amino acid. A suitable amino acid with a sufficiently high adsorption energy (enthalpy) disclosed herein was selected.

In Example 1A, the fluid sorbent included a water-based solution of 1M L-Glycine (where R: H).

In Example 1B, the fluid sorbent included a water-based solution of 1M L-Arginine (where R: HN=C(NH₂)-NH-(CH₂)₃).

In Example 1C, the fluid sorbent included a mixture of amino acid, hexanol, and DBU at a molar ratio of 1:1:1.

In Example 1D, the fluid sorbent included a mixture of at least one amino acid and EEMPA at a molar ratio of 1:1.

In Example 1E, the fluid sorbent included a mixture of at least one amino acid, TEA, and ethanol at a molar ratio of 1:1:1.

The non-limiting example amino acids may be chosen for their ability to efficiently form bicarbonate solutions providing high CO₂ adsorption yields, whereas their concentrations are limited by the precipitation of the bicarbonate-based salts.

The water-based solution contained at least one deprotonated amino acid with the general formula (5):

HₓN-CHR-COOH (5),

or in its deprotonated form may be represented by formula (6):

HₓN-CHR-COO⁻ (6).

where
x is 2; and
R is a hydrogen or carbon group.

In formulas (5) and (6), R may be a hydrogen, C₁-C₁₀₀ alkyl, aryl, or alkylaryl. R may be a C₁-C₄₀ alkyl, a C₁-C₂₀ alkyl, or C₁-C₈ alkyl.

The CO₂ reacted with the amino acid in the form of carbamate. The reaction is represented by formula (7):

2 ⁻OOC-CHR-NH₂ + CO₂ → ⁻OOC-CHR-NHCOO⁻ + ⁻OOC-CHR-NH₃⁺ (7),

where
R is a hydrogen or carbon group. R may be a hydrogen, C₁-C₁₀₀ alkyl, aryl, or alkylaryl. R may be a C₁-C₄₀ alkyl, a C₁-C₂₀ alkyl, or C₁-C₈ alkyl.

In the presence of water or a base, the carbamate further reacted forming bicarbonate salts, with the now free amine group able to again react with CO₂. At high pH, the reaction proceeded further, producing carbonate ions. The reaction is represented by formula (8):

⁻OOC-CHR-NHCOO⁻ + ⁻OOC-CHR-NH₃⁺ + H₂O → ⁻OOC-CHR-NH₂ + ⁻OOC-CHR-NH₃⁺ + HCO₃⁻ (8),

where
R may be a hydrogen or carbon group. R may be a hydrogen, C₁-C₁₀₀ alkyl, aryl, or alkylaryl. R may be a C₁-C₄₀ alkyl, a C₁-C₂₀ alkyl, or C₁-C₈ alkyl. This may be rewritten as shown in formula (9), which demonstrates that in (8), the amino acid (⁻OOC-CHR-NH₂) was reformed and can then react with another CO₂ and H₂O to form another bicarbonate and ₋OOC-CHR-NH₃⁺:

   ⁻OOC-CHR-NH₂ + CO₂ + H₂O → ⁻OOC-CHR-NH₃⁺ + HCO₃⁻ (9),
where
R may be a hydrogen or carbon group. R may be a hydrogen, C₁-C₁₀₀ alkyl, aryl, or alkylaryl. R may be a C₁-C₄₀ alkyl, a C₁-C₂₀ alkyl, or C₁-C₈ alkyl.

### Example 2A-2G - reactions in the second reactor

### Example 2A

After allowing sufficient time for the adsorption process in the first reactor, the CO₂-loaded fluid was then conveyed to the second reaction reactor, as disclosed herein. The second reaction reactor was configured as a mineralization device and the sorbent fluid regeneration. CaO was added to the second reactor, releasing Ca and hydroxyl ions, as is shown in reaction (10):

CaO + H₂O → Ca(OH)₂ → Ca²⁺ + 2OH⁻ (10).

The Ca ions further reacted with the carbonate ions producing insoluble CaCO₃, which was then precipitated and separated. In parallel, one of the two hydroxyl ions regenerated the amino acid solution, which was then removed and supplied to the sequestration reaction reactor for successive adsorption cycles. The second hydroxyl ion formed carbonate. The carbonate production reaction is shown in formulas (11a) and (11b), and the amino acid regeneration is shown in formula (12):

HCO₃⁻ +OH⁻ -> CO₃²⁻ + H₂O (11a),

Ca²⁺ + CO₃²⁻ → CaCO₃ (11b),

⁻OOC-R-CH-NH₃⁺ + OH⁻ → H₂O + ⁻OOC-R-CH-NH₂ (12).

### Example 2B

After allowing sufficient time for the adsorption process, the CO₂-loaded fluid was then conveyed to the second reaction reactor. The second reactor was configured as an electrolyzer and sorbent fluid regeneration. At the anode, oxygen was evolved in the presence of an iridium oxide catalyst system producing the protons and electrons (13):

2H₂O → 4H⁺ + 4e⁻ + O₂ (13),

Simultaneously, at the cathode, the CO₂ in either carbamate (14) or bicarbonate (15) form was directly reduced to carbon monoxide on a silver-based catalyst consuming the protons and electrons produced on the other electrode:

2⁻OOC-R-CH-NHCOO⁻ + 2⁻OOC-R-CH-NH₃⁺ + 4H⁺ + 4e⁻ → 2CO + 2OH⁻ + 2⁻OOC-R-CH-NH₂ + 2⁻OOC-R-CH-NH₃⁺ (14),

2⁻OOC-R-CH-NH₃⁺ + 2HCO₃⁻+ 4H⁺ + 4e⁻ → 2CO + 2H₂O + 2OH⁻ + 2⁻OOC-R-CH-NH₃⁺ (15).

Once the CO was formed, the amino acid reacted further with produced hydroxyl ions regenerating the fluid sorbent to its original state (16, 17):

2CO + 2OH⁻ + 2⁻OOC-R-CH-NH₂ + 2⁻OOC-R-CH-NH₃⁺ → 2CO + 2H₂O + 4⁻OOC-R-CH-NH₂ (16),

2CO + 2H₂O + 2OH⁻ + 2⁻OOC-R-CH-NH₃⁺ → 2CO + 4H₂O + 2⁻OOC-R-CH-NH₂ (17).

The produced CO was separated and collected, while the regenerated fluid sorbent was removed as a ready-to-use fluid for successive adsorption cycles.

### Example 2C

After allowing sufficient time for the adsorption process, the CO₂-loaded fluid was then conveyed to the second reaction reactor. The second reactor was configured as a bipolar membrane electrolyzer operating under reverse bias and sorbent fluid regeneration. At the bipolar junction, water dissociated into H⁺ and OH⁻ ions. At the anode, oxygen was produced through oxidation of the hydroxyl ions:

4OH⁻ → O₂ + 2H₂O (18).

At the cathode, CO₂ was reduced using the H⁺, analogous to reactions (14) and (15). The amino acid reacted further with produced hydroxyl ions, regenerating the fluid sorbent to its original state, analogous to reactions (16) and (17).

### Example 2D

After allowing sufficient time for the adsorption process, the CO₂-enriched sorbent fluid was then mixed with a carbon-supported palladium catalyst at 50°C and 60 bars of pressure with a supply of pressurized hydrogen (H₂) in a thermochemical reactor for 8 hours to produce formic acid. Gas-liquid separation and liquid-liquid separation followed using distillation columns and reboilers to retrieve the formic acid and the regenerated fluid sorbent before recirculating the fluid sorbent to the first reaction reactor.

### Example 2E

After allowing sufficient time for the adsorption process, the loaded fluid sorbent (6-10 wt.% loading) was then mixed with a platinum catalyst (*i.e.,* Pt/TiO₂ and Pt/CeO₂) at 5 wt.% at 170°C-190°C and 60 bars of pressure with a supply of pressurized hydrogen (H₂) in a thermochemical reactor for 12 hours to produce methanol. Gas-liquid separation and liquid-liquid separation followed to retrieve methanol and the regenerated fluid sorbent before recirculating the fluid sorbent to the first reaction reactor.

### Example 2F

After allowing sufficient time for the adsorption process, the loaded fluid sorbent was then mixed with an activated catalyst mixture of 55.7 wt.% Cu, 26.8 wt.% ZnO, and 5 wt.% Al₂O₃ at 170°C and 60 bars of pressure with a supply of pressurized hydrogen (H₂) in a thermochemical reactor for 16 hours to produce methanol. Gas-liquid separation and liquid-liquid separation followed to retrieve methanol and the regenerated fluid sorbent before recirculating the fluid sorbent to the first reaction reactor.

### Example 2G

After allowing sufficient time for the adsorption process, the loaded fluid sorbent was then mixed with a heterogenous ruthenium catalyst at 170°C and less than 15 bars of pressure with a supply of pressurized hydrogen (H₂) in a thermochemical reactor for 16 hours to produce methanol. Gas-liquid separation to retrieve methane and liquid-liquid separation followed to retrieve the regenerated fluid sorbent before recirculating the fluid sorbent to the first reaction reactor.

### Example 2H

After allowing sufficient time for the adsorption process, the loaded sorbent fluid was then mixed with a ruthenium complex at 145°C at 2-20 bars of pressure in a thermochemical reactor for at least 30 minutes to produce formate. Separation and purification methods were then used to separate and purify the formate and the sorbent fluid.

The following application is related to present applications: U.S. Pat. Appln. Serial No. 18/162,326, filed January 31, 2023 (RBPA0421PUS) and U.S. Pat. Appln. Serial No. 18/347,614, filed July 6, 2023 (RBPA0421PUS1).

The processes, methods, or algorithms disclosed herein may be deliverable to or implemented by a processing device, sensor, transponder, controller, or computer, which may include any existing programmable electronic control unit or dedicated electronic control unit. Similarly, the processes, methods, or algorithms may be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms may also be implemented in a software executable object. Alternatively, the processes, methods, or algorithms may be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, *etc.* As such, to the extent any embodiments are described as less desirable than other embodiments or prior art implementations with respect to one or more characteristics, these embodiments are not outside the scope of the disclosure and can be desirable for particular applications.

## Claims

1. A direct air capture of CO₂ system comprising:
a first reaction reactor configured to sequester CO₂ from ambient air via a fluid sorbent including one or more amino acids; and
an in-situ bipolar membrane electrolyzer, connected to the first reaction reactor, configured to both (a) regenerate the fluid sorbent via chemical removal of CO₂ from the fluid sorbent and (b) react the removed CO₂ to a non-CO₂ end-product.

2. The system of claim 1, wherein the chemical removal includes reacting the fluid sorbent with hydroxyl ions.

3. The system of claim 1, wherein the fluid sorbent is an aqueous solution including L-glycine.

4. The system of claim 1, wherein the bipolar membrane electrolyzer operates in a reverse-bias mode.

5. The system of claim 1, wherein the bipolar membrane electrolyzer includes a cross-linked matrix with a dispersed vinyl monomer.

6. The system of claim 1, wherein the first reaction reactor and the bipolar membrane electrolyzer are adjacent portions of a common vessel separated from each other by a divider.

7. The system of claim 1, wherein the bipolar membrane electrolyzer includes a catalyst having a transition metal.

8. The system of claim 1, wherein the fluid sorbent binds the CO₂ from the ambient air in the form of a carbamate, bicarbonate, carbonate, or their combination.

9. A direct air capture of CO₂ system comprising:
a CO₂ sequestration reaction reactor including an aqueous solution with at least one amino acid having binding affinity for CO₂; and
a bipolar membrane electrolyzer in fluid communication with the CO₂ sequestration reaction reactor,
the system having two states including
in the CO₂ sequestration reaction reactor, a first state of the aqueous solution binding CO₂ from ambient air in a form of a carbamate, bicarbonate, carbonate, or their combination; and
in the regeneration reaction reactor, a second state of producing hydroxyl ions and protons via a water disproportionation reaction and regenerating the aqueous solution utilizing the hydroxyl ions.

10. The system of claim 9, wherein the bipolar membrane electrolyzer operates in a reverse-bias mode.

11. The system of claim 9, wherein the second state further includes reducing the bound CO₂ to a non-CO₂ end-product.

12. The system of claim 9, wherein the second state is catalyzed with one or more precious metals.

13. The system of claim 9, wherein the at least one amino acid includes a mixture of amino acids.

14. The system of claim 9, wherein the at least one amino acid includes L-Arginine where R is HN=C(NH₂)-NH-(CH₂)₃.

15. A direct air capture of CO₂ system comprising:
a first reaction reactor including an amino acid water-based solution configured to sequester CO₂ from ambient air;
one or more conduits leading the amino acid water-based solution from the first reaction reactor after binding the CO₂; and
a plurality of second reaction reactors, each connected to at least one of the one or more conduits and configured to regenerate the amino acid water-based solution by removing the bound CO₂ while simultaneously utilizing the sequestered CO₂ to form one or more end-products.

16. The system of claim 1, wherein the plurality of second reaction reactors includes a bipolar membrane electrolyzer.

17. The system of claim 1, wherein the CO₂ is bound as a carbamate, bicarbonate, carbonate, or their combination on the amino acid water-based solution.

18. The system of claim 1, wherein each second reaction reactor receives a different volume of the amino acid water-based solution.

19. The system of claim 1, wherein the amino acid water-based solution includes a mixture of amino acids.

20. The system of claim 1, wherein the plurality of second reaction reactors includes reactors including different thermal and chemical conditions.
